# EUROPÄISCHE PATENTSCHRIFT

(11) **EP 3 642 939 B1**
(45) Veröffentlichungstag und Bekanntmachung des Hinweises auf die Patenterteilung: **07.04.2021**
(21) Anmeldenummer: 18718154.0
(22) Anmeldetag: 17.04.2018
(51) Int. Cl.: H02K 3/12, H02K 3/28

(54) **STATOR FÜR EINE ELEKTRISCHE MASCHINE**
STATOR FOR AN ELECTRICAL MACHINE
STATOR POUR MACHINE ÉLECTRIQUE

(30) Priorität: 21.06.2017 DE 102017210445
(43) Veröffentlichungstag der Anmeldung: 29.04.2020
(73) Patentinhaber: Robert Bosch GmbH, 70442 Stuttgart (DE)
(72) Erfinder: FRUEHAUF, Patrick, 71636 Ludwigsburg (DE); KREMER, Mickael, 71282 Hemmingen (DE); RIEDL, Johannes, 81369 Muenchen (DE)
(86) Internationale Anmeldenummer: PCT/EP2018/059737
(87) Internationale Veröffentlichungsnummer: WO 2018/233896

(56) Entgegenhaltungen:
- DE-A1- 10 331 841
- DE-A1-102015 004 576
- US-A1- 2012 146 447

## Beschreibung

### Stand der Technik

Die Erfindung geht aus von einem Stator für eine elektrische Maschine nach der Gattung des Hauptanspruchs.

Es ist schon ein Stator für eine elektrische Maschine aus der JP2014007795 A oder der DE 103 31 841 A1 bekannt, welcher eine als Steckwicklung ausgebildete Mehrphasenwicklung trägt, deren Wicklungsstränge durch Nuten des Stators verlaufen und mehrere unterschiedliche Leiterelemente umfassen. Zumindest einige dieser Leiterelemente weisen jeweils zwei Schenkelabschnitte und jeweils einen die zwei Schenkelabschnitte verbindenden Verbindungsabschnitt auf. In jeder Nut des Stators ist eine geradzahlige Anzahl von n elektrischen Leitern in radialer Richtung bezüglich einer Statorachse übereinander angeordnet. Jeder Schenkelabschnitt eines der Leiterelemente ist in seiner Nut in einer bestimmten Lage bezüglich eines Nutgrundes der Nut vorgesehen. Die Leiterelemente liegen derart in den Nuten, dass alle Verbindungsabschnitte auf derselben Stirnseite des Stators liegen. Außerdem sind die den Verbindungsabschnitten abgewandten Enden der Leiterelemente zur Bildung der Mehrphasenwicklung miteinander verbunden.

Diese Mehrphasenwicklungen umfassen häufig eine vergleichsweise große Anzahl von unterschiedlichen Leiterelementen, insbesondere sogenannte Sonderverbinder, die von den Standard-Leiterelementen abweichen. Diese Sonderverbinder erhöhen die Herstellungskosten.

### Vorteile der Erfindung

Der erfindungsgemäße Stator mit den kennzeichnenden Merkmalen des Hauptanspruchs hat demgegenüber den Vorteil, dass für die Mehrphasenwicklung weniger unterschiedliche Leiterelemente vorgesehen sind. Außerdem ist der für die Mehrphasenwicklung benötigte Bauraum verringert. Darüber hinaus sind die ersten Enden aller Wicklungszweige geometrisch nah beieinander angeordnet, um die Kontaktierung an die Leistungselektronik auf kleinem Bauraum zu ermöglichen.
Dies wird erreicht, indem zwei parallele Wicklungszweige des Wicklungsstrangs jeweils mit einem ersten Ende in der gleichen Nut vorgesehen sind und von dort aus schleifenförmig in entgegengesetzte Umfangsrichtung jeweils bis zu einem zweiten Ende verlaufen, wobei eines der ersten Enden des einen Wicklungszweigs als in der untersten Nutlage liegendes Anschluss-Leiterelement und das andere erste Ende des anderen Wicklungszweigs als in der obersten Nutlage liegendes Anschluss-Leiterelement vorgesehen ist. Zusätzlich ist erfindungsgemäß in den parallelen Wicklungszweigen jeweils eine sich wiederholende Abfolge von einem der unteren Leiterelemente, einem oder mehreren mittleren Leiterelementen, einem der oberen Leiterelemente und einem oder mehreren der mittleren Leiterelemente ,oder umgekehrt, vorgesehen, wobei die unteren Leiterelemente jeweils in der gleichen Nutlage liegende Schenkelabschnitte und die oberen Leiterelemente jeweils in der gleichen Nutlage liegende Schenkelabschnitte aufweisen, wobei die Schrittweite der unteren Leiterelemente und die Schrittweite der oberen Leiterelemente gleich ist und wobei die mittleren Leiterelemente in den Nuten zwischen der untersten Nutlage und der obersten Nutlage liegen, jeweils von ihrem einen Schenkelabschnitt zu ihrem anderen Schenkelabschnitt einen Lagensprung vom Wert eins aufweisen und die gleiche Schrittweite wie die oberen und unteren Leiterelemente haben.

Durch die in den Unteransprüchen aufgeführten Maßnahmen sind vorteilhafte Weiterbildungen und Verbesserungen des im Hauptanspruch angegebenen Stators möglich.

Besonders vorteilhaft ist, wenn die unteren Leiterelemente jeweils zwei Enden aufweisen, die in die gleiche Umfangsrichtung abgewinkelt sind und die oberen Leiterelemente jeweils zwei Enden aufweisen, die in die gleiche Umfangsrichtung und entgegengesetzt zu den Enden der unteren Leiterelemente abgewinkelt sind. Die mittleren Leiterelemente haben jeweils zwei Enden, die in Umfangsrichtung zueinander abgewinkelt sind und Fügeabschnitte umfassen. Die Fügeabschnitte überdecken sich in Umfangsrichtung bezüglich der Statorachse gesehen und sind in radialer Richtung gesehen zueinander beabstandet. Mittels dieser Leiterelemente werden eine symmetrisch verteilte Wicklung und gleichförmig aufgebaute Wickelköpfe erreicht.

Sehr vorteilhaft ist es, wenn die zweiten Enden zweier gleichphasiger paralleler Wicklungszweige in unterschiedlichen gleichphasigen Nuten unterschiedlicher Magnetpole enden, und dort jeweils in der gleichen Nutlage wie das zugehörige erste Ende vorgesehen sind. Auf diese Weise wird die geometrische Gestaltung des Sternpunkts bzw. die Verschaltung der elektrischen Maschine vereinfacht, da keine Sonder-Leiterelemente benötigt werden, die in radialer über den Wickelkopf hinausragend verschaltet werden.

Vorteilhaft ist, wenn die zweiten Enden aller Wicklungszweige an einem äußeren oder einem inneren Sternpunkt angeschlossen sind, wobei Wicklungszweige, die mit dem ersten Ende in einer untersten Nutlage liegen, mit dem in der untersten Nutlage liegenden inneren Sternpunkt verbunden sind, und wobei Wicklungszweige, die mit dem ersten Ende in einer obersten Nutlage liegen, mit dem in der obersten Nutlage liegenden äußeren Sternpunkt verbunden sind. Auf diese Weise wird die geometrische Gestaltung des Sternpunkts bzw. die Verschaltung der elektrischen Maschine vereinfacht, da keine Sonder-Leiterelemente benötigt werden, die in radialer über den Wickelkopf hinausragend verschaltet werden.

Außerdem vorteilhaft ist, wenn die beiden Sternpunkte jeweils drei miteinander verbundene Schenkelabschnitte umfassen. Auf diese Weise lassen sich die Sternpunkte besonders einfach fertigen, da diese aus Leiterelementen vorkonfektioniert werden und anschließend als ganzes Element in den Stator gesteckt werden können.

Darüber hinaus vorteilhaft ist, wenn der innere Sternpunkt und der äußere Sternpunkt zu einem gemeinsamen Sternpunkt verschaltet sind. Auf diese Weise werden zwei Bauteile zu einem Bauteil zusammengefasst.

Des weiteren vorteilhaft ist, wenn zwei gleichphasige parallele Wicklungszweige entlang ihrem Verlauf durch die Nuten jeweils eine bestimmte Verteilung der zugehörigen Schenkelabschnitte auf die Nutlagen aufweisen. Diese Verteilung der Nutlagen ist für gleichphasige parallele Wicklungszweige gleich, d.h. die Nutlagen kommen über die gesamte Länge jedes der beiden Wicklungszweige gesehen gleich häufig vor. Auf diese Weise wird eine sogenannte Lagensymmetrie erreicht, die die in den parallel geschalteten Wicklungszweigen induzierten Kreisströme und die damit verbundenen Kupferverluste reduziert.

Auch vorteilhaft ist, wenn die ersten Enden und die zweiten Enden aller Wicklungszweige auf der den Verbindungsabschnitten zugewandten Stirnseite des Stators angeordnet sind. Auf diese Weise wird eine einheitliche Schweißseite erzeugt, was einen nachträglichen Fertigungsschritt der Pulverbeschichtung der Schweißenden vereinfacht.

### Zeichnung

Ein Ausführungsbeispiel der Erfindung ist in der Zeichnung vereinfacht dargestellt und in der nachfolgenden Beschreibung näher erläutert.
- Fig.1: zeigt eine dreidimensionale Ansicht auf eine Stirnseite eines erfindungsgemäßen Stators,
- Fig.2: ein erstes Leiterelement der Mehrphasenwicklung nach Fig.1,
- Fig.3: ein zweites Leiterelement der Mehrphasenwicklung nach Fig.1,
- Fig.4: ein drittes Leiterelement der Mehrphasenwicklung nach Fig.1,
- Fig.5: einen Ausschnitt einer Draufsicht auf den Stator nach Fig.1, bei dem nur vier einzelne, in derselben Nut angeordnete Leiterelemente der Steckwicklung nach Fig.1 dargestellt sind,
- Fig.6: eine dreidimensionale Ansicht auf die andere Stirnseite des erfindungsgemäßen Stators nach Fig.1,
- Fig.7: von einer gemeinsamen Nut aus verlaufende erste Enden von zwei parallelen Wicklungszweigen der erfindungsgemäßen Mehrphasenwicklung nach Fig.1 und Fig.6,
- Fig.8: eine einzelne Abfolge der mehreren Leiterelemente nach Fig.2 bis Fig.4,
- Fig.9: einen Ausschnitt des Wickelschemas der erfindungsgemäßen Mehrphasenwicklung für den Wicklungsstrang der Phase U, und
- Fig.10: die zweiten Enden der erfindungsgemäßen Wicklungszweige für alle Phasen

### Beschreibung des Ausführungsbeispiels

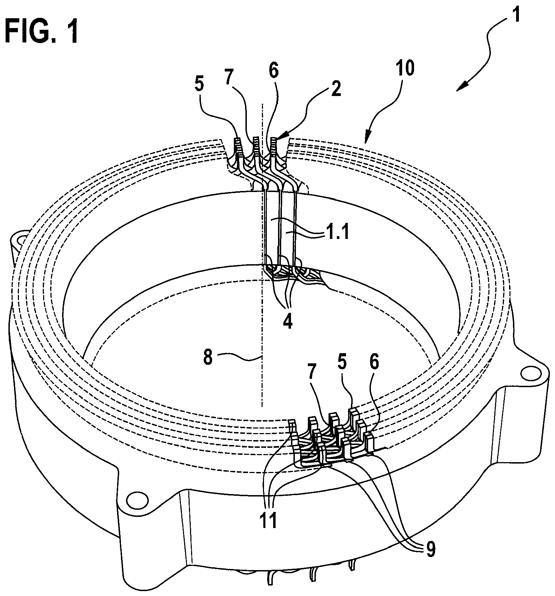

Fig.1 zeigt eine dreidimensionale Ansicht auf eine Stirnseite eines erfindungsgemäßen Stators mit beispielsweise sechs Leitern pro Nut.

Der erfindungsgemäße Stator 1 einer elektrischen Maschine weist eine als Steckwicklung ausgebildete Mehrphasenwicklung 2 auf, deren einzelne Wicklungsstränge 3 durch Nuten 4 des Stators 1 verlaufen und mehrere unterschiedliche, elektrisch in Reihe geschaltete Leiterelemente 5,6,7 umfassen.

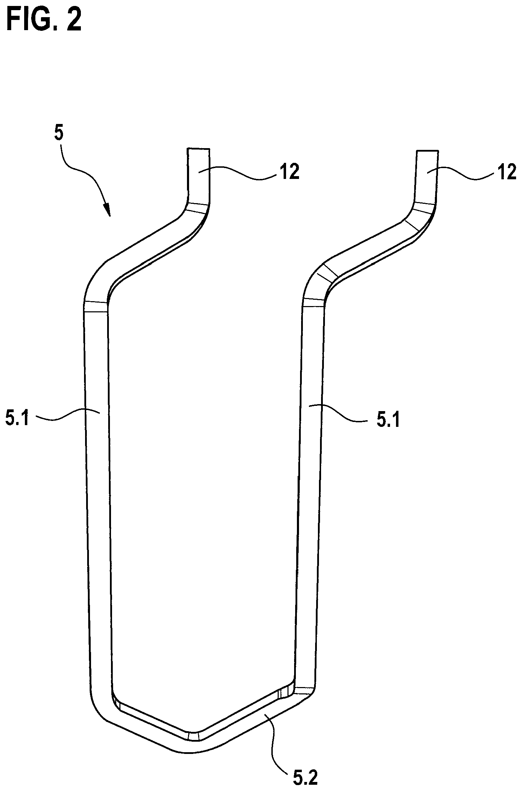

Zumindest einige, insbesondere eine Mehrzahl dieser Leiterelemente 5,6,7 sind nach Fig.2, Fig.3 und Fig.4 ausgebildet. Jeder Wicklungsstrang 3 der Mehrphasenwicklung 2 ist einer der elektrischen Phasen u,v,w der elektrischen Maschine zugeordnet. Die Mehrphasenwicklung 2 ist beispielsweise eine Dreiphasen- oder Sechsphasenwicklung.

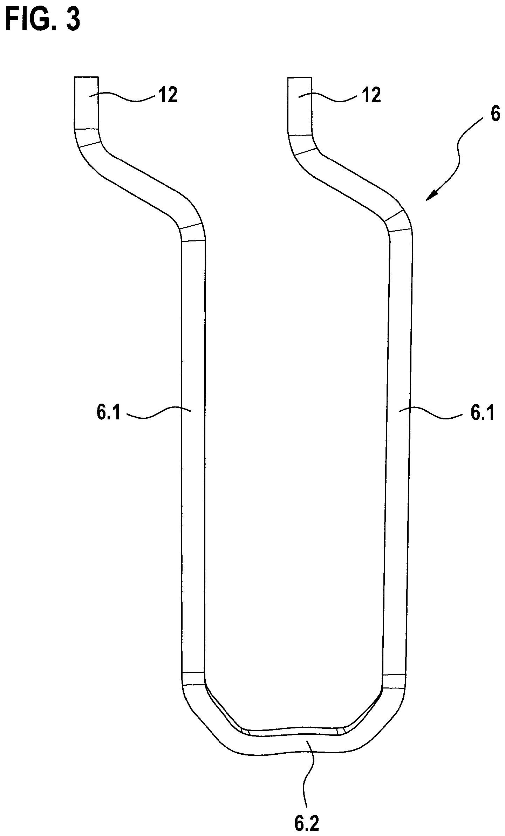

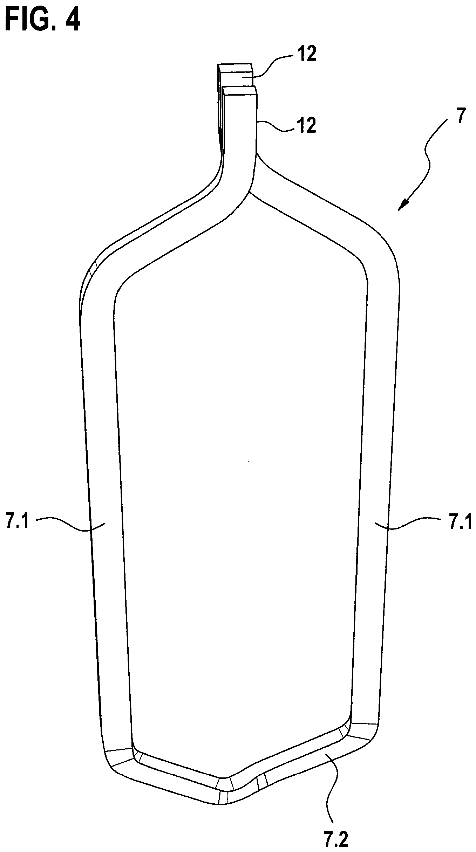

Fig.2 zeigt ein erstes Leiterelement 5, Fig.3 ein zweites Leiterelement 6 und Fig.4 ein drittes Leiterelement 7 der Steckwicklung 2 nach Fig.1. Die unterschiedlichen Leiterelemente 5,6,7 nach Fig.2 bis Fig.4 haben jeweils zwei Schenkelabschnitte 5.1,6.1,7.1 und jeweils einen die zwei Schenkelabschnitte 5.1,6.1,7.1 verbindenden Verbindungsabschnitt 5.2,6.2.7.2, der beispielsweise U-förmig oder V-förmig ausgebildet ist und zumindest eine dreidimensionale Biegung zur Umgehung anderer Verbindungsabschnitte 5.2,6.2.7.2 aufweisen kann. Die Leiterelemente 5,6,7 sind jeweils mit einer elektrisch isolierenden Lackschicht versehen. Der Querschnitt der Leiterelemente 5,6,7 ist beispielsweise rechteckförmig, kann aber auch einen viereckförmig, rund oder beliebig anders ausgeführt sein.

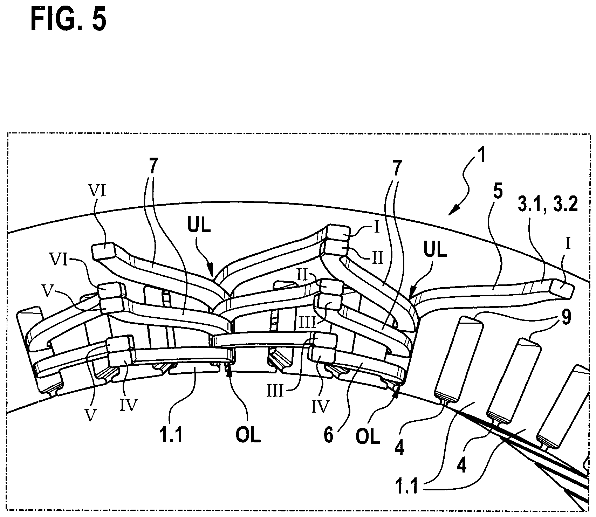

Fig.5 zeigt einen Ausschnitt einer Draufsicht auf den Stator nach Fig.1, bei dem nur sechs einzelne, in derselben Nut 4 angeordnete Leiterelemente 5,6,7 der Steckwicklung 2 nach Fig.1 dargestellt sind.

In jeder Nut 4 des Stators 1 ist eine geradzahlige Anzahl von n elektrischen Leitern, also n Schenkelabschnitten 5.1,6.1,7.1,17,18,19 in radialer Richtung bezüglich einer Statorachse 8 übereinander angeordnet, wobei jeder Schenkelabschnitt 5.1,6.1,7.1 eines der Leiterelemente 5,6,7 in seiner Nut 4 in einer bestimmten Lage bezüglich eines Nutgrundes 9 der Nut 4 vorgesehen ist. Das Leiterelement 5 ist mit beiden Schenkelabschnitten 5.1 jeweils in der untersten, also bezüglich dem Nutgrund 9 ersten Lage UL angeordnet, wird im folgenden als unteres Leiterelement 5 bezeichnet und liegt am Nutgrund 9 bzw. ist dem Nutgrund 9 zugewandt. Das Leiterelement 6 liegt jeweils mit beiden Schenkelabschnitten 6.1 in der obersten, nach dem Ausführungsbeispiel in der vom Nutgrund 9 aus gezählten sechsten Lage OL und wird im folgenden als oberes Leiterelement 6 bezeichnet. In den Nuten 4 zwischen der untersten und obersten Lage, also nach Fig.5 in der zweiten bis fünften Lage, sind jeweils die dritten Leiterelemente 7 angeordnet, die im folgenden als mittlere Leiterelemente 7 bezeichnet sind.

Zwischen den Schenkelabschnitten 5.1,6.1,7.1, die über einen Verbindungsabschnitt 5.2,6.2,7.2 oder eine Fügeverbindung 11 miteinander verbunden sind, ist jeweils eine bestimmte Schrittweite vorgesehen, die den Abstand zwischen den in den Nuten 4 befindlichen Schenkelabschnitten 5.1,6.1,7.1 mit der Anzahl der im Stator 1 zu überwindenden Statorzähne bzw. mit der Anzahl der Nuten 4 angibt, um die weitergesprungen werden muss, um vom jeweiligen ersten Schenkelabschnitt zum zugehörigen zweiten Schenkelabschnitt zu gelangen. Nach Fig.5 beträgt die Schrittweite der oberen, unteren und mittleren Leiterelemente 5,6,7 beispielsweise drei Nuten.

Die Nuten 4 im Stator 1 sind beispielsweise zwischen in radialer Richtung bezüglich der Statorachse 8 verlaufenden Zähnen 1.1 des Stators 1 gebildet.

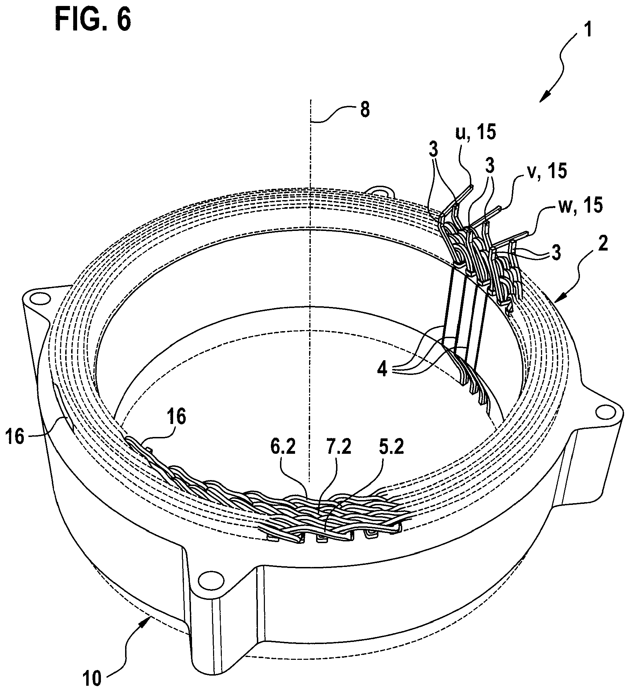

Fig.6 zeigt eine dreidimensionale Ansicht auf die andere Stirnseite des erfindungsgemäßen Stators nach Fig.1. Nach Fig.1 und Fig.6 liegen die Leiterelemente 5,6,7 derart in den Nuten 4, dass alle Verbindungsabschnitte 5.2,6.2,7.2 auf derselben Stirnseite des Stators 1 liegen. Dadurch liegen alle den Verbindungsabschnitten 5.2,6.2,7.2 abgewandten Enden der Leiterelemente 5,6,7 auf der derselben anderen Stirnseite des Stators 1, die auch als Verbindungsseite 10 bezeichnet wird. Die den Verbindungsabschnitten 5.2,6.2,7.2 abgewandten Enden der Leiterelemente 5,6,7 sind zur Bildung der Steckwicklung 2 stoffschlüssig miteinander verbunden, wobei jeweils zwei stoffschlüssig miteinander verbundene Leiterelemente 5,6,7 eine Fügeverbindung 11 bilden. Nach Fig.1 sind alle Fügeverbindungen 11, die jeweils eines der oberen Leiterelemente 6 mit einem der mittleren Leiterelemente 7 verbinden, auf einem ersten Kreis angeordnet, dessen Mittelpunkt auf der Statorachse 8 liegt. Ebenso sind alle Fügeverbindungen 11, die eines der unteren Leiterelemente 5 mit einem der mittleren Leiterelemente 7 verbinden, auf einem zweiten Kreis vorgesehen, dessen Mittelpunkt auf der Statorachse 8 liegt. Außerdem sind alle Fügeverbindungen 11, die eines der mittleren Leiterelemente 7 mit einem anderen der mittleren Leiterelemente 7 verbinden, auf einem dritten Kreis vorgesehen, der zwischen dem ersten und dem zweiten Kreis und dessen Mittelpunkt auf der Statorachse 8 liegt. Zur Bildung der Fügeverbindungen 11 haben die jeweiligen Leiterelemente 5,6,7 jeweils Fügeabschnitte 12.

Die ersten Enden E1 und die zweiten Enden E2 aller Wicklungszweige 3.1,3.2 sind für alle Phasen u,v,w auf der den Verbindungsabschnitten 5.2,6.2,7.2 zugewandten Stirnseite des Stators 1 angeordnet. Die ersten Enden E1 der Wicklungszweige 3.1,3.2 weisen jeweils einen Phasenanschluss 15 auf, d.h. ersten Enden E1 bilden diesen oder sind mit einem solchen verbunden. Die zweiten Enden E2 der Wicklungszweige 3.1,3.2 sind für alle Phasen u,v,w an einen Sternpunkt 16 elektrisch angeschlossen.

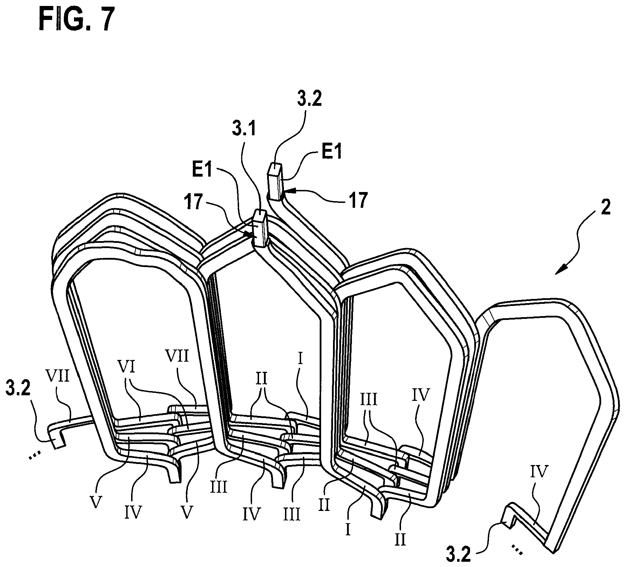

Fig.7 zeigt von einer gemeinsamen Nut 4 aus verlaufende erste Enden E1 von zwei parallelen Wicklungszweigen 3.1,3.2 der erfindungsgemäßen Mehrphasenwicklung nach Fig.1 und Fig.6. In Fig.7 sind Schenkelabschnitte, die zu demselben Leiterelement 5,6,7 gehören, mit dergleichen römischen Nummerierung versehen.

Erfindungsgemäß ist vorgesehen, dass zwei parallele Wicklungszweige 3.1,3.2 zumindest eines der Wicklungsstränge 3, vorzugsweise jedes Wicklungsstrangs 3, jeweils mit einem ersten Ende E1 in der gleichen Nut 4 vorgesehen sind und von dort aus schleifenförmig in entgegengesetzte Umfangsrichtung jeweils bis zu einem zweiten Ende E2 verlaufen, wobei eines der ersten Enden E1 des einen Wicklungszweigs 3.1,3.2 als in der untersten Nutlage liegendes Anschluss-Leiterelement 17 und das andere erste Ende E1 des anderen Wicklungszweigs 3.1,3.2 als in der obersten Nutlage liegendes Anschluss-Leiterelement 17 vorgesehen ist. Die beiden Anschluss-Leiterelement 17 sind im Gegensatz zu den Leiterelementen 5,6,7 beispielsweise einschenklig ausgeführt.

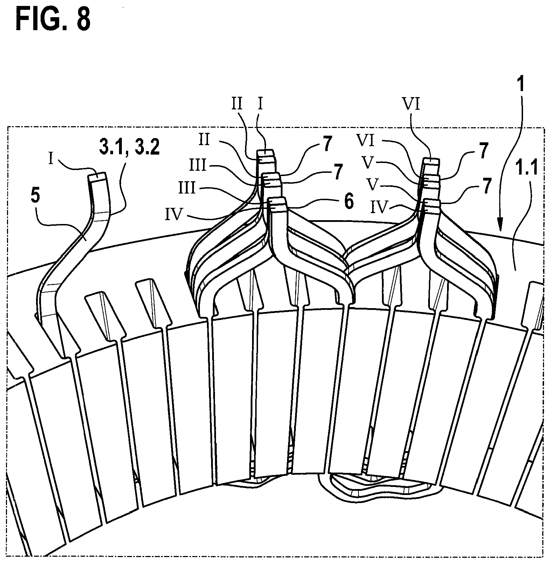

Fig.8 zeigt eine einzelne Abfolge der mehreren Leiterelemente nach Fig.2 bis Fig.4, wobei die einzelne Abfolge gebildet ist aus einem der unteren Leiterelemente 5, einem oder mehreren mittleren Leiterelementen 7, einem der oberen Leiterelemente 6 und einem oder mehreren der mittleren Leiterelemente 7 oder umgekehrt.

Erfindungsgemäß ist ein paralleler Wicklungszweig 3.1,3.2 zumindest abschnittsweise, insbesondere zwischen sein Enden E1,E2, gebildet durch eine sich wiederholende, also mehrfache Abfolge von einem der unteren Leiterelemente 6, einem oder mehreren mittleren Leiterelementen 7, einem der oberen Leiterelemente 5 und einem oder mehreren der mittleren Leiterelemente 7 oder umgekehrt.

Dabei weisen die unteren Leiterelemente 5 jeweils in der gleichen Nutlage, also am Nutgrund 9, liegende Schenkelabschnitte 5.1 und die oberen Leiterelemente 6 jeweils in der gleichen Nutlage, also in der obersten Lage, liegende Schenkelabschnitte 6.1 auf. Die Schrittweite der unteren Leiterelemente 5 und die Schrittweite der oberen Leiterelemente 6 ist gleich groß ausgebildet und beträgt beispielsweise drei Nuten. Die mittleren Leiterelemente 7 liegen in den Nuten 4 zwischen der untersten Nutlage und der obersten Nutlage, weisen jeweils von ihrem einen Schenkelabschnitt 7.1 zu ihrem anderen Schenkelabschnitt 7.2 einen Lagensprung vom Wert eins auf, beispielsweise von der zweiten Lage in die dritte Lage oder von der dritten Lage in die vierte Lage oder von der vierten Lage in die fünfte Lage. Die mittleren Leiterelemente 7 haben jeweils die gleiche Schrittweite wie die oberen und unteren Leiterelemente 5,6.

Die unteren Leiterelemente 5,5.1 haben jeweils zwei Enden, die in die gleiche Umfangsrichtung abgewinkelt sind (Fig.2). Die oberen Leiterelemente 6,6.1 haben jeweils auch zwei Enden, die in die gleiche Umfangsrichtung und entgegengesetzt zu den Enden der unteren Leiterelemente 5 abgewinkelt sind (Fig.3). Die mittleren Leiterelemente 7,7.1 wiederum weisen jeweils zwei Enden auf, die in Umfangsrichtung zueinander abgewinkelt sind und Fügeabschnitte 12 umfassen, die sich in Umfangsrichtung gesehen überdecken und in radialer Richtung gesehen zueinander beabstandet sind (Fig.4).

Zwischen den über eine Fügeverbindung 11 verbundenen Schenkelabschnitten 5.1,6.1,7.1 ist jeweils die gleiche Schrittweite vorgesehen.

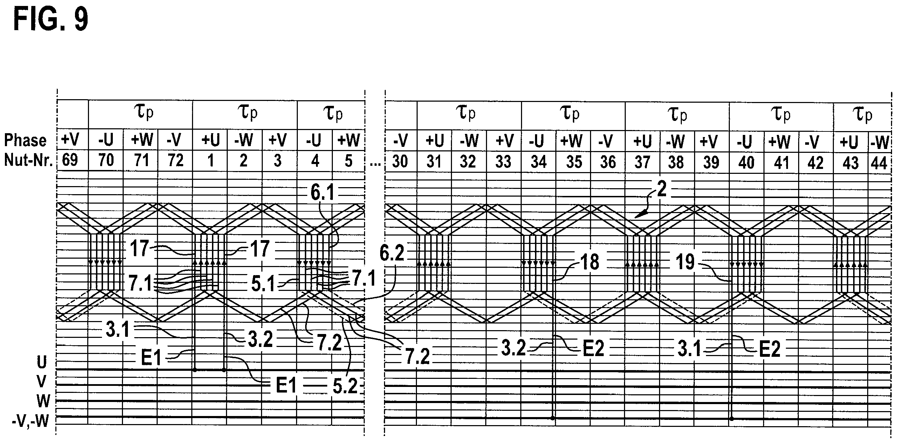

Fig.9 zeigt einen Ausschnitt des Wickelschemas der erfindungsgemäßen Mehrphasenwicklung für den Wicklungsstrang der Phase U. Die anderen Wicklungsstränge verlaufen äquivalent. In dem Wickelschema ist der Verlauf der zwei parallelen Wicklungszweige 3.1,3.2 des Wicklungsstrangs 3 der Phase U durch die Nuten 4 des Stators 1 ausschnittsweise dargestellt. Außerhalb des ersten Ausschnittes, der von der Nut 69 bis zur Nut 5 reicht, und des zweiten Ausschnittes, der von der Nut 30 bis zur Nut 44 reicht, verlaufen die beiden parallelen Wicklungszweige 3.1,3.2 der Phase U äquivalent.

Jede Spalte des Wickelschemas stellt eine Nut 4 des Stators 1 dar, die mit einer fortlaufenden Nummer versehen ist. Nach dem Ausführungsbeispiel sind jeweils sechs Leiter bzw. Leiterschenkel 5.1,6.1,7.1 pro Nut 4 vorgesehen. Der jeweils in einer der Spalten des Wickelschemas ganz rechts angeordnete Leiterschenkel 5.1,6.1,7.1 befindet sich in der obersten Lage der Nut 4 und der jeweils in einer der Spalten ganz links angeordnete Leiterschenkel 5.1,6.1 befindet sich in der untersten Lage der Nut 4. Der Stator 1 hat mehrere Magnetpole τₚ, wobei jeder Magnetpol τₚ mehrere, beispielsweise drei Nuten 4 umfasst.
Gemäß Fig.9 sind in derselben Nut 4 liegende Schenkelabschnitte 5.1,6.1,7.1 ausschließlich derselben elektrischen Phase u,v,w zugeordnet. Innerhalb eines der Magnetpole τₚ und pro elektrischer Phase u,v,w jeweils eine einzige gleichphasige Nut mit gleichphasigen Schenkelabschnitten vorgesehen ist. Dies entspricht einer sogenannten Lochzahl q der Mehrphasenwicklung vom Wert gleich eins.

Die beiden ersten Enden E1 mit den beiden Anschluss-Leiterelementen 17 der zwei parallelen Wicklungszweige 3.1,3.2 sind gemäß dem Wickelschema der Fig.9 in der gleichen Nut 4 mit der Nut-Nummer 1 vorgesehen und die parallelen Wicklungszweige 3.1,3.2 verlaufen von dort aus in entgegengesetzte Umfangsrichtung jeweils bis zu dem zweiten Ende E2. Die zweiten Enden E2 zweier gleichphasiger paralleler Wicklungszweige 3.1,3.2 enden in unterschiedlichen gleichphasigen Nuten 4 unterschiedlicher Magnetpole τₚ, und sind dort jeweils in der gleichen Nutlage wie das zugehörige erste Ende E1 vorgesehen. So ist das zweite Ende E2 des ersten Wicklungszweiges 3.1 wie das erste Ende E1 des ersten Wicklungszweiges 3.1 in der obersten Lage und das zweite Ende E2 des zweiten Wicklungszweiges 3.2 wie das erste Ende E1 des zweiten Wicklungszweiges 3.2 in der untersten Lage angeordnet.

Der Wicklungszweig 3.2, der mit dem ersten Ende E1 in einer untersten Nutlage liegt, ist am zweiten Ende E2 mit einem in der untersten Nutlage liegenden und das zweite Ende E2 bildenden inneren Sternpunkt-Leiterelement 18 verbunden. Der Wicklungszweig 3.1, der mit dem ersten Ende E1 in einer obersten Nutlage liegt, ist am zweiten Ende E2 mit dem in der obersten Nutlage liegenden und das zweite Ende E2 bildenden äußeren Sternpunkt-Leiterelement 19 verbunden.

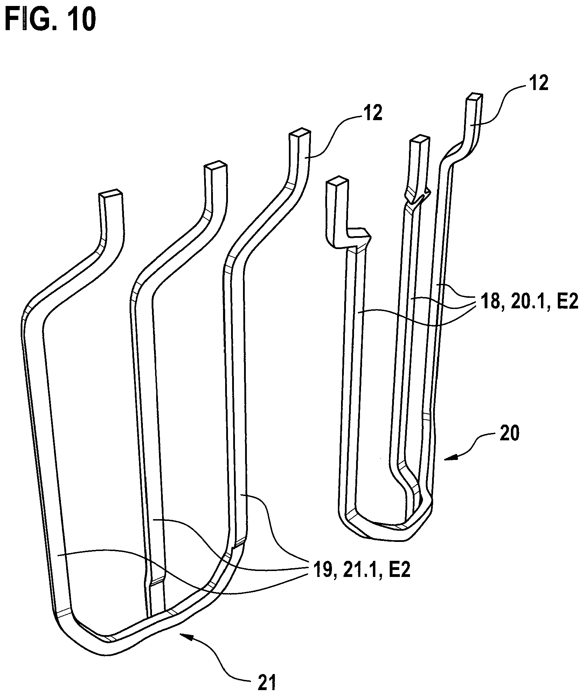

Nach Fig.10 sind die inneren Sternpunkt-Leiterelemente 18 aller erfindungsgemäßen Wicklungsstränge 3 beispielsweise zu einem inneren Sternpunkt-Element 20 zusammengefasst, das beispielsweise drei Schenkelabschnitte 20.1 aufweist. Außerdem sind die äußeren Sternpunkt-Leiterelemente 19 aller Wicklungsstränge 3 beispielsweise zu einem äußeren Sternpunkt-Element 21 zusammengefasst, das beispielsweise drei Schenkelabschnitte 21.1 aufweist. Das innere Sternpunkt-Element 20 und das äußere Sternpunkt-Element 21 können zu einem gemeinsamen Sternpunkt verschaltet sein.

Zwei gleichphasige parallele Wicklungszweige 3.1,3.2 haben entlang ihrem Verlauf durch die Nuten 4 jeweils eine bestimmte Verteilung der zugehörigen Schenkelabschnitte 5.1,6.1,7.1 auf die einzelnen Nutlagen in den Nuten 4. Diese Verteilung der Nutlagen ist für gleichphasige parallele Wicklungszweige 3.1,3.2 gleich, d.h. die Nutlagen kommen über die gesamte Länge jedes der beiden Wicklungszweige 3.1,3.2 gesehen gleich häufig vor.

## Patentansprüche

1. Stator (1) für eine elektrische Maschine, welcher eine als Steckwicklung ausgebildete und eine Lochzahl q von eins aufweisende Mehrphasenwicklung (2) aufweist, die einer bestimmten elektrischen Phase (u,v,w) zugeordnete Wicklungsstränge (3) aufweist, die durch Nuten (4) des Stators (1) verlaufen und mehrere unterschiedliche Leiterelemente (5,6,7,17,18,19) umfassen, wobei zumindest einige dieser Leiterelemente (5,6,7) jeweils zwei Schenkelabschnitte (5.1,6.1,7.1) und jeweils einen die zwei Schenkelabschnitte (5.1,6.1,7.1) verbindenden Verbindungsabschnitt (5.2,6.2.7.2) aufweisen, wobei
- in jeder Nut (4) eine geradzahlige Anzahl von n elektrischen Leitern (5,6,7,17,18,19) in radialer Richtung bezüglich einer Statorachse (8) übereinander angeordnet ist, wobei jeder elektrische Leiter (5,6,7,17,18,19) in seiner Nut (4) in einer bestimmten Nutlage bezüglich eines Nutgrundes (9) der Nut (4) vorgesehen ist, wobei
- die Leiterelemente (5,6,7) derart in den Nuten (4) liegen, dass alle Verbindungsabschnitte (5.2,6.2.7.2) auf derselben Stirnseite des Stators (1) liegen, wobei
- die den Verbindungsabschnitten (5.2,6.2.7.2) abgewandten Enden der Schenkelabschnitte (5.1,6.1,7.1) zur Bildung der Mehrphasenwicklung (2) miteinander verbunden sind, wobei jeweils zwei stoffschlüssig miteinander verbundene Schenkelabschnitte (5.1,6.1,7.1) eine Fügeverbindung (11) bilden,
- die Wicklungsstränge (3) in einer dem Nutgrund (9) zugewandten untersten Nutlage liegende untere Leiterelemente (5) und in einer dem Nutgrund (9) abgewandten obersten Nutlage liegende obere Leiterelemente (6) umfasst, wobei
- zwischen den in den Nuten (4) befindlichen Schenkelabschnitten (5.1,6.1,7.1), die über einen Verbindungsabschnitt (5.2,6.2.7.2) oder eine Fügeverbindung (11) miteinander verbunden sind, jeweils eine bestimmte Schrittweite vorgesehen ist,
**dadurch gekennzeichnet, dass**
- pro Wicklungsstrang (3) zwei parallele Wicklungszweige (3.1,3.2) vorgesehen sind, die jeweils mit einem ersten Ende (E1) in der gleichen Nut (4) vorgesehen sind und von dort aus schleifenförmig in entgegengesetzte Umfangsrichtung jeweils bis zu einem zweiten Ende (E2) verlaufen, wobei eines der ersten Enden (E1) des einen Wicklungszweigs (3.1,3.2) als in der untersten Nutlage liegendes Anschluss-Leiterelement (17) und das andere erste Ende (E1) des anderen Wicklungszweigs (3.1,3.2) als in der obersten Nutlage liegendes Anschluss-Leiterelement (17) vorgesehen ist,
- in den parallelen Wicklungszweigen (7) eine sich wiederholende Abfolge von einem der unteren Leiterelemente (6), einem oder mehreren mittleren Leiterelementen (7), einem der oberen Leiterelemente (5) und einem oder mehreren der mittleren Leiterelemente (7), oder umgekehrt, vorgesehen ist, wobei
- die unteren Leiterelemente (5) jeweils in der gleichen Nutlage liegende Schenkelabschnitte (5.1) und die oberen Leiterelemente (6) jeweils in der gleichen Nutlage liegende Schenkelabschnitte (6.1) aufweisen, wobei die Schrittweite der unteren Leiterelemente (5) und die Schrittweite der oberen Leiterelemente (6) gleich ist, wobei
- die mittleren Leiterelemente (7) in den Nuten (4) zwischen der untersten Nutlage und der obersten Nutlage liegen, jeweils von ihrem einen Schenkelabschnitt (7.1) zu ihrem anderen Schenkelabschnitt (7.2) einen Lagensprung vom Wert eins aufweisen und die gleiche Schrittweite wie die oberen und unteren Leiterelemente (5,6) haben.

2. Stator nach Anspruch 1, **dadurch gekennzeichnet, dass** die unteren Leiterelemente (5) jeweils zwei Enden aufweisen, die in die gleiche Umfangsrichtung abgewinkelt sind und die oberen Leiterelemente (6) jeweils zwei Enden aufweisen, die in die gleiche Umfangsrichtung und entgegengesetzt zu den Enden der unteren Leiterelemente (5) abgewinkelt sind, und die mittleren Leiterelemente (7) jeweils zwei Enden aufweisen, die in Umfangsrichtung zueinander abgewinkelt sind und Fügeabschnitte (12) umfassen, die sich in Umfangsrichtung gesehen überdecken und in radialer Richtung gesehen zueinander beabstandet sind.

3. Stator nach einem der vorhergehenden Ansprüche, **dadurch gekennzeichnet, dass** die zweiten Enden (E2) zweier gleichphasiger paralleler Wicklungszweige (3.1,3.2) in unterschiedlichen gleichphasigen Nuten (4) unterschiedlicher Magnetpole (τₚ) enden, und dort jeweils in der gleichen Nutlage wie das zugehörige erste Ende (E1) vorgesehen sind.

4. Stator nach einem der vorhergehenden Ansprüche, **dadurch gekennzeichnet, dass** die zweiten Enden (E2) aller Wicklungszweige (3.1,3.2) an einem äußeren oder einem inneren Sternpunkt (20,21) angeschlossen sind, wobei Wicklungszweige (3.2), die mit dem ersten Ende (E1) in einer untersten Nutlage liegen, mit einem in der untersten Nutlage liegenden inneren Sternpunkt (20) verbunden sind, und wobei Wicklungszweige (3.1), die mit dem ersten Ende (E1) in einer obersten Nutlage liegen, mit dem in der obersten Nutlage liegenden äußeren Sternpunkt (21) verbunden sind.

5. Stator nach Anspruch 4, **dadurch gekennzeichnet, dass** die beiden Sternpunkte (20,21) jeweils drei miteinander verbundene Schenkelabschnitte (20.1,21.1) umfassen.

6. Stator nach einem der Ansprüche 4 oder 5, **dadurch gekennzeichnet, dass** der innere Sternpunkt (20) und der äußere Sternpunkt (21) zu einem gemeinsamen Sternpunkt verschaltet sind.

7. Stator nach einem der vorhergehenden Ansprüche, **dadurch gekennzeichnet, dass** zwei gleichphasige parallele Wicklungszweige (3.1,3.2) entlang ihrem Verlauf durch die Nuten (4) jeweils eine bestimmte Verteilung der zugehörigen Schenkelabschnitte auf die Nutlagen aufweisen, wobei diese Verteilung für parallele Wicklungszweige (3.1,3.2) gleich ist.

8. Stator nach einem der vorhergehenden Ansprüche, **dadurch gekennzeichnet, dass** die ersten Enden (E1) und die zweiten Enden (E2) aller Wicklungszweige (3.1,3.2) auf der den Verbindungsabschnitten (5.2,6.2,7.2) zugewandten Stirnseite des Stators (1) angeordnet sind.

9. Elektrische Maschine mit einem Stator nach einem der vorhergehenden Ansprüche.

## Claims

1. Stator (1) for an electrical machine, which stator has a polyphase winding (2) which is designed as an insert winding and has a number q of holes of one and has winding strands (3) which are associated with a specific electrical phase (u, v, w) and run through slots (4) of the stator (1) and comprise a plurality of different conductor elements (5, 6, 7, 17, 18, 19), wherein at least some of these conductor elements (5, 6, 7) each have two limb sections (5.1, 6.1, 7.1) and each have a connecting section (5.2, 6.2, 7.2) which connects the two limb sections (5.1, 6.1, 7.1), wherein
- an even number of n electrical conductors (5, 6, 7, 17, 18, 19) are arranged one above the other in the radial direction with respect to a stator axis (8) in each slot (4), wherein each electrical conductor (5, 6, 7, 17, 18, 19) is provided in its slot (4) in a specific slot layer with respect to a slot base (9) of the slot (4), wherein
- the conductor elements (5, 6, 7) lie in the slots (4) in such a way that all of the connecting sections (5.2, 6.2, 7.2) lie on the same end side of the stator (1), wherein
- the ends of the limb sections (5.1, 6.1, 7.1), which ends are averted from the connecting sections (5.2, 6.2, 7.2), are connected to one another for forming the polyphase winding (2), wherein in each case two limb sections (5.1, 6.1, 7.1), which are connected to one another in a materially bonded manner, form a joint connection (11),
- the winding strands (3) comprise lower conductor elements (5), which are situated in a lowermost slot layer which faces the slot base (9), and upper conductor elements (6), which are situated in an uppermost slot layer which is averted from the slot base (9), wherein
- a specific interval width is respectively provided between the limb sections (5.1, 6.1, 7.1) which are located in the slots (4) and are connected to one another via a connecting section (5.2, 6.2, 7.2) or a joint connection (11),
**characterized in that**
- two parallel winding branches (3.1, 3.2) are provided for each winding strand (3) and are each provided in the same slot (4) by way of a first end (E1) and, from there, run in the manner of a loop in the opposite circumferential direction in each case as far as a second end (E2), wherein one of the first ends (E1) of the one winding branch (3.1, 3.2) is provided as connection conductor element (17) which is situated in the lowermost slot layer and the other first end (E1) of the other winding branch (3.1, 3.2) is provided as connection conductor element (17) which is situated in the uppermost slot layer,
- a recurring sequence of one of the lower conductor elements (6), one or more central conductor elements (7), one of the upper conductor elements (5) and one or more of the central conductor elements (7), or the reverse, is provided in the parallel winding branches (7), wherein
- the lower conductor elements (5) each have limb sections (5.1) which are situated in the same slot layer and the upper conductor elements (6) each have limb sections (6.1) which are situated in the same slot layer, wherein the interval width of the lower conductor elements (5) and the interval width of the upper conductor elements (6) are the same, wherein
- the central conductor elements (7) lie in the slots (4) between the lowermost slot layer and the uppermost slot layer, each have a layer step of the value one from their one limb section (7.1) to their other limb section (7.2) and have the same interval width as the upper and lower conductor elements (5, 6).

2. Stator according to Claim 1, **characterized in that** the lower conductor elements (5) each have two ends which are angled in the same circumferential direction and the upper conductor elements (6) each have two ends which are angled in the same circumferential direction and opposite to the ends of the lower conductor elements (5), and the central conductor elements (7) each have two ends which are angled in relation to one another in the circumferential direction and comprise joint sections (12) which overlap as seen in the circumferential direction and are spaced apart from one another as seen in the radial direction.

3. Stator according to either of the preceding claims, **characterized in that** the second ends (E2) of two in-phase parallel winding branches (3.1, 3.2) end in different in-phase slots (4) of different magnetic poles (τₚ) and, there, are each provided in the same slot layer as the associated first end (E1).

4. Stator according to one of the preceding claims, **characterized in that** the second ends (E2) of all of the winding branches (3.1, 3.2) are connected to an outer or an inner star point (20, 21), wherein winding branches (3.2) which lie in a lowermost slot layer by way of the first end (E1) are connected to an inner star point (20) which is situated in the lowermost slot layer, and wherein winding branches (3.1) which lie in an uppermost slot layer by way of the first end (E1) are connected to the outer star point (21) which is situated in the uppermost slot layer.

5. Stator according to Claim 4, **characterized in that** the two star points (20, 21) each comprise three limb sections (20.1, 21.1) which are connected to one another.

6. Stator according to either of Claims 4 and 5, **characterized in that** the inner star point (20) and the outer star point (21) are interconnected to form a common star point.

7. Stator according to one of the preceding claims, **characterized in that** two in-phase parallel winding branches (3.1, 3.2) each have, along their profile through the slots (4), a specific distribution of the associated limb sections over the slot layers, wherein this distribution is the same for parallel winding branches (3.1, 3.2).

8. Stator according to one of the preceding claims, **characterized in that** the first ends (E1) and the second ends (E2) of all of the winding branches (3.1, 3.2) are arranged on that end side of the stator (1) which faces the connecting sections (5.2, 6.2, 7.2).

9. Electrical machine comprising a stator according to one of the preceding claims.

## Revendications

1. Stator (1) pour une machine électrique, lequel comprend un enroulement polyphasé (2) réalisé sous la forme d'un enroulement enfiché et présentant un nombre de trous q de un, lequel enroulement polyphasé comprend des faisceaux d'enroulement (3) associés à une phase électrique (u, v, w) déterminée, lesquels s'étendent à travers des rainures (4) du stator (1) et comportent plusieurs éléments conducteurs (5, 6, 7, 17, 18, 19) différents, au moins certains de ces éléments conducteurs (5, 6, 7) comprenant respectivement deux parties formant branches (5.1, 6.1, 7.1) et respectivement une partie de connexion (5.2, 6.2, 7.2) connectant les deux parties formant branches (5.1, 6.1, 7.1),
- un nombre pair de n conducteurs électriques (5, 6, 7, 17, 18, 19) étant disposés les uns au-dessus des autres dans la direction radiale par rapport à un axe de stator (8) dans chaque rainure (4), chaque conducteur électrique (5, 6, 7, 17, 18, 19) étant prévu dans sa rainure (4) dans une couche de rainure déterminée par rapport à un fond de rainure (9) de la rainure (4),
- les éléments conducteurs (5, 6, 7) se trouvant dans les rainures (4) de telle sorte que toutes les parties de connexion (5.2, 6.2, 7.2) se trouvent sur le même côté frontal du stator (1),
- les extrémités des parties formant branches (5.1, 6.1, 7.1) qui sont opposées aux parties de connexion (5.2, 6.2, 7.2) étant connectées les unes aux autres afin de former l'enroulement polyphasé (2), deux parties formant branches (5.1, 6.1, 7.1) connectées l'une à l'autre par liaison de matière formant respectivement une jointure (11),
- les faisceaux d'enroulement (3) comportant des éléments conducteurs inférieurs (5) qui se trouvent dans une couche de rainure la plus basse faisant face au fond de rainure (9) et des éléments conducteurs supérieurs (6) qui se trouvent dans une couche de rainure la plus haute opposée au fond de rainure (9),
- une largeur de pas déterminée étant respectivement prévue entre les parties formant branches (5.1, 6.1, 7.1) qui se trouvent dans les rainures (4), lesquelles sont reliées les unes aux autres par le biais d'une partie de connexion (5.2, 6.2, 7.2) ou d'une jointure (11), **caractérisé en ce que**
- pour chaque faisceau d'enroulement (3), deux branches d'enroulement parallèles (3.1, 3.2) sont prévues, lesquelles sont prévues respectivement par une première extrémité (E1) dans la même rainure (4) et, à partir de là, s'étendent en forme de boucle dans des sens périphériques opposés respectivement jusqu'à une deuxième extrémité (E2), l'une des premières extrémités (E1) de l'une des branches d'enroulement (3.1, 3.2) étant prévue en tant qu'élément conducteur de raccordement (17) se trouvant dans la couche de rainure la plus basse et l'autre première extrémité (E1) de l'autre branche d'enroulement (3.1, 3.2) étant prévue en tant qu'élément conducteur de raccordement (17) se trouvant dans la couche de rainure la plus haute,
- une séquence répétitive de l'un des éléments conducteurs inférieurs (6), d'un ou plusieurs éléments conducteurs centraux (7), de l'un des éléments conducteurs supérieurs (5) et d'un ou plusieurs des éléments conducteurs centraux (7), ou inversement, étant prévue dans les branches d'enroulement parallèles (7),
- les éléments conducteurs inférieurs (5) comprenant des parties formant branches (5.1) qui se trouvent respectivement dans la même couche de rainure et les éléments conducteurs supérieurs (6) comprenant des parties formant branches (6.1) qui se trouvent respectivement dans la même couche de rainure, la largeur de pas des éléments conducteurs inférieurs (5) et la largeur de pas des éléments conducteurs supérieurs (6) étant identiques,
- les éléments conducteurs centraux (7) se trouvant dans les rainures (4) entre la couche de rainure la plus basse et la couche de rainure la plus haute, présentant respectivement un saut de couche de valeur un de l'une de leurs parties formant branches (7.1) à leur autre partie formant branche (7.2) et présentant la même largeur de pas que les éléments conducteurs supérieurs et inférieurs (5, 6).

2. Stator selon la revendication 1, **caractérisé en ce que** les éléments conducteurs inférieurs (5) comprennent respectivement deux extrémités qui sont coudées dans le même sens périphérique et les éléments conducteurs supérieurs (6) comprennent respectivement deux extrémités qui sont coudées dans le même sens périphérique et à l'opposé des extrémités des éléments conducteurs inférieurs (5), et les éléments conducteurs centraux (7) comprennent respectivement deux extrémités qui sont coudées l'une par rapport à l'autre dans le sens périphérique et comportent des parties de jointure (12) qui se chevauchent vues dans le sens périphérique et qui sont espacées l'une de l'autre vues dans la direction radiale.

3. Stator selon l'une des revendications précédentes, **caractérisé en ce que** les deuxièmes extrémités (E2) de deux branches d'enroulement (3.1, 3.2) équiphases parallèles se terminent dans des rainures (4) équiphases différentes de différents pôles magnétiques (τₚ), et y sont respectivement prévues dans la même couche de rainure que la première extrémité (E1) associée.

4. Stator selon l'une des revendications précédentes, **caractérisé en ce que** les deuxièmes extrémités (E2) de toutes les branches d'enroulement (3.1, 3.2) sont raccordées à un point neutre externe ou à un point neutre interne (20, 21), des branches d'enroulement (3.2) qui se trouvent par la première extrémité (E1) dans une couche de rainure la plus basse étant connectées à un point neutre interne (20) se trouvant dans la couche de rainure la plus basse, et des branches d'enroulement (3.1) qui se trouvent par la première extrémité (E1) dans une couche de rainure la plus haute étant connectées au point neutre externe (21) se trouvant dans la couche de rainure la plus haute.

5. Stator selon la revendication 4, **caractérisé en ce que** les deux points neutres (20, 21) comportent respectivement trois parties formant branches (20.1, 21.1) connectées les unes aux autres.

6. Stator selon l'une des revendications 4 et 5, **caractérisé en ce que** le point neutre interne (20) et le point neutre externe (21) sont connectés à un point neutre commun.

7. Stator selon l'une des revendications précédentes, **caractérisé en ce que** deux branches d'enroulement (3.1, 3.2) équiphases parallèles présentent, le long de leur allure à travers les rainures (4), respectivement une répartition déterminée des parties formant branches associées sur les couches de rainure, cette répartition étant identique pour des branches d'enroulement (3.1, 3.2) parallèles.

8. Stator selon l'une des revendications précédentes, **caractérisé en ce que** les premières extrémités (E1) et les deuxièmes extrémités (E2) de toutes les branches d'enroulement (3.1, 3.2) sont disposées sur le côté frontal, tourné vers les parties de connexion (5.2, 6.2, 7.2), du stator (1).

9. Machine électrique comportant un stator selon l'une des revendications précédentes.
